# EUROPÄISCHE PATENTSCHRIFT

(11) **EP 0 790 274 B1**
(45) Veröffentlichungstag und Bekanntmachung des Hinweises auf die Patenterteilung: **31.03.2004**
(21) Anmeldenummer: 97101411.3
(22) Anmeldetag: 30.01.1997
(51) Int. Cl.: C08J 9/02, C08J 9/00, C08G 75/02

(54) **Verschäumbare Formmassen**
Expandable moulding compositions
Masses à mouler expansibles

(30) Priorität: 14.02.1996 DE 19605359
(43) Veröffentlichungstag der Anmeldung: 20.08.1997
(73) Patentinhaber: Ticona GmbH, 65451 Kelsterbach (DE)
(72) Erfinder: Scheckenbach, Helmut, 63225 Langen (DE); Schönfeld, Axel, Dr., 65207 Wiesbaden (DE); Weis, Siegfried, 65817 Eppstein (DE)

(56) Entgegenhaltungen:
- EP-A- 0 668 324
- EP-A- 0 738 760
- EP-A- 0 791 664
- WO-A-96/05246
- DE-A- 4 428 737
- DATABASE WPI Section Ch, Week 8851 Derwent Publications Ltd., London, GB; Class A18, AN 88-365210 XP002008792 & JP 63 275 667 A (KANEBO LTD) , 14.November 1988

## Beschreibung

Die Erfindung betrifft eine verschäumbare Formmasse auf Basis einer Mischung aus Sulfoxidgruppen enthaltenden Polymeren und einen hochtemperaturbeständigen Polymer, ein Verfahren zur Herstellung von Schaumstoff durch thermische Behandlung der Formmasse sowie deren Verwendung.

Üblicherweise werden Polymermassen geschäumt, indem der Polymermasse ein niedermolekulares Blähmittel zugesetzt wird, das in der Hitze gasförmige Abspaltprodukte freisetzt. Hochtemperaturbeständige Polymere lassen sich mit diesen herkömmlichen Blähmitteln in der Regel aber nur sehr schlecht aufschäumen, weil die Temperaturbedingungen schwer steuerbar sind. Es hat daher in der Vergangenheit nicht an Versuchen gefehlt, Schäume aus hochtemperaturbeständigen Polymeren ohne den Zusatz von Blähmitteln herzustellen.

Zum Beispiel lehrt die WO 96/05246 ein Verfahren zur Herstellung von Polyarylensulfid-Schaum, wobei Gemische von Polyarylensulfiden mit Polyarylensulfoxiden erhitzt werden.

In der EP-A-738760 wird Polyamid-Schaum offenbart, der durch Erhitzen einer Mischung von Polyamid mit Polyarylensulfoxid-Einheiten enthaltenden Polymeren erhalten wird.

Die EP-A-791664 beschreibt die Herstellung von Formmassen durch thermische Behandlung von Mischungen aus thermoplastischen Hochleistungspolymeren (u.a. Polyarylensulfonen) und teiloxidierten Polyarylensulfiden. Eine Schaumbildung bei der Herstellung der Formmassen ist nicht offenbart.

JP-63/327667 A lehrt eine Zusammensetzung aus einem Thermoplasten, beispielsweise Polyethersulfon und einem oxidierten Polyarylensulfid, die auf > 150 °C erhitzt wird. Die Zusammensetzung kann Treibmittel enthalten.

In der EP-A-668324 ist eine Mischung aus Polyphenylensulfon und Polyphenylensulfoxid erwähnt, die auf 360 °C erhitzt wird. Eine Schaumbildung wird nicht beschrieben.

Es bestand daher die Aufgabe, ein einfaches, thermisches Verfahren zur Herstellung von Schäumen einer Vielzahl weiterer hochtemperaturbeständiger Polymerer zur Verfügung zu stellen, das ohne den Zusatz konventioneller Blähmittel auskommt.

Es wurde überraschend gefunden, daß eine Formmasse, d.h. eine Mischung von einem thermisch stabilen Kunststoff, insbesondere von einem thermoplastisch verarbeitbarem hochtemperaturbeständigen Polymer, mit Polymeren, die Sulfoxidgruppen enthalten, leicht einen Schaum bildet. Unter der Einwirkung von Hitze zersetzt sich das Sulfoxidgruppen enthaltende Polymer, wobei Gase entstehen, die zum Aufschäumen der Polymermasse führen.

Die Aufgabe wird daher gelöst durch ein Verfahren, bei dem eine Formmasse aus
A) mindestens einem hochtemperaturbeständigen Polymer mit der Ausnahme von Polyamiden,
B) 1 bis 99 Gew.-% (bezogen auf den Gesamt-Polymeranteil der Formmasse) mindestens eines Polyarylensulfoxids mit einem Sulfoxid-Anteil (bezogen auf alle Schwefel enthaltenden Brücken im Polymer) von mindestens 95 %, und
C) gegebenenfalls üblichen Additiven
auf 250 bis 470 °C erhitzt wird.

Das hochtemperaturbeständige Polymer ist beispielweise ein Thermoplast, ein Hochleistungskunststoff oder Hochleistungspolymer. Derartige Polymere sind beispielsweise Polyethersulfone, Polyarylensulfide, Polyetherimide, Polyarylate, Polyaryletherketone, Polycarbonate, Cycloolefincopolymere (COC), Polyimide, Polyamidimide, flüssigkristalline Polymere (LCP), Fluorpolymere, Polyarylenether oder Mischungen davon.

Die Formmasse enthält vorzugsweise 1 bis 50 Gew.-%, insbesondere 3 bis 20 Gew.-%, der Komponente B).

Unter Polyarylensulfoxiden werden Polymere oder Oligomere verstanden, die wenigstens eine Arylensulfoxid - Einheit (-Ar-SO-; Ar = Arylen) enthalten. Den Arylenen liegen beispielsweise ein- oder mehrkernige aromatische Verbindungen zugrunde, die unsubstituiert oder ein- oder mehrfach substituiert sein können. Beispiele hierfür sind Phenylen, Biphenylen (-C₆H₄-C₆H₄-), Naphthalen, Anthracen oder Phenanthren. Substituenten sind z. B. geradkettige, cyclische oder verzweigte C₁ - C₂₀ - Kohlenwasserstoffreste, wie C₁ - C₁₀ - Alkylreste, vorzugsweise Methyl, Ethyl, n-Propyl, iso-Propyl, n-Butyl, t-Butyl, n-Hexyl oder C₆ - C₁₄ - Arylreste, vorzugsweise Phenyl oder Naphthyl oder auch Halogene, Sulfonsäure-, Amino-, Nitro-, Cyano-, Hydroxy-, Alkyloxy- oder Carboxylgruppen.

Bevorzugte Sulfoxidgruppen enthaltende Polymere sind Polyarylensulfidsulfoxide und Polyarylensulfoxide, insbesondere Polyphenylensulfidsulfoxid und Polyphenylensulfoxid, die z. B. leicht durch teilweise oder vollständige Oxidation der Schwefelgruppen von Polyarylensulfiden mit Ozon oder NO₂/N₂O₄ hergestellt werden können. Der Sulfoxid-Anteil (bezogen auf alle Schwefel enthaltenden Brücken im Polymer) liegt bei mindestens 95 %. Polyarylensulfidsulfoxide werden im folgenden auch als Polyarylensulfoxide verstanden und werden von dem Begriff Polyarylensulfoxide miterfaßt. Die Polyarylensulfoxide können auch Anteile an Sulfongruppen enthalten. Die Herstellung der Sulfoxidgruppen enthaltenen Polymere ist zum Beispiel in den deutschen Patentanmeldungen DE 4314735, DE 4314736, DE 4440010 und DE 19531163 beschrieben.

Unter Hochleistungspolymeren werden Kunststoffe verstanden, die einen Schmelzpunkt von oberhalb von 100 °C, insbesondere oberhalb von 200 ° C, aufweisen. Diese werden beispielsweise beschrieben in Ullmann's Encyclopedia of Industrial Chemistry, 5. Auflage, VCH Verlagsgesellschaft mbH, Weinheim-New York 1992: organische Fluorpolymere, Volume A11, S. 393-430; Polyamide, Volume A21, S. 179-206; Polycarbonate, Volume A21, S.207-216; Polyester, Volume A21, S. 227-252; Polyimide, Volume A21, S. 253-273; Polymerblends, Volume A21, S. 274-305; Hochtemperaturbeständige Polymere, Volume A21, S. 449-472; Polymethylmethacrylate, Volume A21, S. 473-486; Polyphenylenoxide, Volume A21, S. 605-614; Polyurethane, Volume A21, S. 665-716 und Silikone, Volume A24, S.57-95.

Hochleistungskunststoffe werden beispielsweise in "G.W. Becker, D. Braun: Kunststoff - Handbuch Bd. 3/3, Carl Hanser Verlag, München 1994" beschrieben (1. Polyarylate: S. 1-53; 2. Polyarylensulfide: S. 55-140; 3. Polysulfone: S. 141-217; 4. Flüssigkristalline Polyester: S. 219-258; 5. Polyimide: S. 263-293; 6. Polyetherimide: S. 297-335; 7. Polyamidimide: S. 337-356; 8. Poly(aryletherketone): S. 359-385).

Polycarbonate werden beispielsweise in "Encyclopedia of Polymer Science and Engineering, John Wiley & Sons, New York 1988, Vol. 11, S. 648-718" beschrieben.

Cycloolefin Copolymere (COC) werden beschrieben in "H. Cherdron, M. Brekner und F. Osan, Die Angewandte Makromolekulare Chemie (223), 121, (1994)".

Die Formmasse oder eine Mischung, die mindestens ein hochtemperaturbeständiges Polymer und mindestens ein Polyarylensulfoxid enthält, kann ab einer Temperatur von mindestens 300 °C in einen Kunststoffschaum überführt werden.

Gegenstand der Erfindung sind somit geschäumte hochtemperaturbeständige Polymere, erhältlich durch Erhitzen von einer Mischung oder Formmasse, die mindestens ein hochtemperaturbeständiges Polymer mit der Ausnahme von Polyamiden und mindestens ein Polyarylensulfoxid mit einem Sulfoxid-Anteil von mindestens 95% und gegebenenfalls übliche Additive enthält, auf eine Temperatur von 250 bis 470 °C. Die Zeit der Hitzeeinwirkung beträgt im allgemeinen 5 bis 60 Minuten, vorzugsweise 5 bis 30 Minuten.

Der erzielbare Schäumungseffekt hängt von der Art des Sulfoxidgruppen enthaltenden Polymers, insbesondere von der Menge der Sulfoxidgruppen ab und von dem Anteil des Sulfoxidgruppen enthaltenden Polymers in der Polymer-Mischung. Außerdem ist der Schäumungseffekt von der Schmelzviskosität des zu verschäumenden hochtemperaturbeständigen Polymers und von der Verarbeitungstemperatur abhängig.

Das Erhitzen der Mischung oder der Formmasse zum Zweck der Schäumung erfolgt im allgemeinen in einem Temperaturbereich von 300°C bis 470°C. Der Temperaturbereich hängt von der Struktur des verwendeten Sulfoxidgruppen enthaltenden Polymers sowie vom Schmelzpunkt des zu verschäumenden Polymers (hochtemperaturbeständiges Polymer) ab und kann daher auch außerhalb des genannten Temperaturbereiches, z. B. unterhalb 300°C, d.h. bis ca. 250°C, liegen. Bei Verwendung von Polyphenylensulfoxid liegt die Schaumbildungstemperatur vorzugsweise im Bereich von 300°C bis 350°C.

Gemäß der Erfindung können als hochtemperaturbeständiges Polymer auch Mischungen oder Blends verschiedener hochtemperaturbeständiger Polymere und als Sulfoxidgruppen enthaltendes Polymer auch Mischungen verschiedener Sulfoxidgruppen enthaltenden Polymere eingesetzt werden.

Die Mischungen oder Formmassen gemäß der Erfindung können übliche Additive enthalten, wie thermische Stabilisatoren, UV-Stabilisatoren, Antistatika, Flammschutzmittel, Farbstoffe, Pigmente, anorganische und/oder organische Füllstoffe (Pulver, Fasern u.s.w.) oder Gleitmittelzusätze wie Molybdändisulfid, Graphit oder Polytetrafluorethylen. Bei Verwendung von üblichen Mengen ergibt sich keine Beeinträchtigung der physikalischen oder mechanischen Eigenschaften der gebildeten Schäume.

Zur Herstellung des Schaumes ist es zweckmäßig, daß das Polyarylensulfoxid möglichst fein und gleichmäßig in der Mischung oder Formmasse verteilt ist. Dies wird beispielsweise durch Verwendung feiner Pulver der Komponenten erreicht. Es besteht auch die Möglichkeit, eine gute Vermischung durch eine thermische Verarbeitung, z.B. mit handelsüblichen Knetem oder Extrudern, vorzugsweise Zweiwellenextrudern, bei Temperaturen, bei denen das zu verschäumende Polymer aufschmilzt, zu erzielen. Das dabei gebildete mehrphasige Blend kann dann zu Pellets, Granulat oder Pulver verarbeitet werden, die keine Entmischung der einzelnen Pulver-Komponenten aufweisen und somit eine gleichmäßige Verarbeitung ermöglichen.

So kann zum Beispiel bei Verwendung von Polyphenylensulfoxid zunächst eine ungeschäumte Formmasse bei Temperaturen unterhalb von 300°C hergestellt werden. Diese ungeschäumte Formmasse läßt sich dann durch thermische Behandlung oberhalb von 300°C in einen Schaumstoff, d.h. in eine geschäumte Formmasse oder ein geschäumtes Formteil überführen.

Der gebildete Schaumstoff weist im allgemeinen eine gegenüber dem unverschäumten Material um mindestens 50 Prozent verringerte Dichte auf.

Die Polyarylensulfoxide, insbesondere solche, die bei den Verarbeitungstemperaturen nicht aufschmelzen, sollten ebenfalls als möglichst feines Pulver eingesetzt werden, um einen gleichmäßigen Schaum zu erzielen.

Im allgemeinen liegen die mittleren Komgrößen der eingesetzten Polymere A) und B) im Bereich von um 0,3 bis 500 µm, vorzugsweise von 5 bis 300 µm, insbesondere von 5 bis 100 µm.

Das mittlere Molekulargewicht der Polyarylensulfoxide, ausgedrückt als Gewichtsmittel M_{w}, liegt im allgemeinen im Bereich von 4 000 bis 200 000 g/mol, bevorzugt von 10 000 bis 150 000 g/mol, insbesondere von 25 000 bis 100 000 g/mol.

Nach dem erfindungsgemäßen Verfahren erhaltene Schäume können zur Herstellung von Formteilen verwendet werden. Entweder wird die Formmasse in eine geschlossene Form gegeben, darin aufgeschäumt und das gewünschte gebildete Formteil der Form entnommen oder es wird aus der Formmasse durch Erhitzen ein Schaum mit einer dichten, geschlossenen Außenhaut (Integralschaum) gebildet, aus dem dann durch mechanische Behandlung (schneiden, sägen o.a.) ein Formteil hergestellt wird.

Die Formteile können als hochbeanspruchbare Funktionsbauteile, beispielsweise im Flugzeugbau, im Automobilbau und der Elektronik, verwendet werden. Weitere Verwendungen der Formteile bieten sich im chemischen Apparatebau an. Die Schäume oder Formteile können auch als wärme- und temperaturbeständige Isolationsmaterialien dienen.

Vorteile des erfindungsgemäßen Verfahrens zur Herstellung schaumförmiger hochtemperaturbeständiger Polymere sind darin zu sehen, daß
- kein Zusatz von niedermolekularen Treibmitteln notwendig ist,
- das Verfahren mit einfachen technischen Mitteln durchführbar ist,
- Schäume mit besonders geringer Dichte möglich sind
- und daß ein breiter Bereich des Schäumungsgrades und der Porengröße einstellbar sind.

### Beispiele:

1. Herstellung von Polyphenylensulfoxid:
54,08 g Polyphenylensulfid ( ®Fortron 0205 B4, Ticona GmbH) wurden in 300 ml 99%-iger Dichloressigsäure und 1 g 95 bis 97 %-iger Schwefelsäure bei 25 °C suspendiert. Anschließend wurden unter Rühren 46 g N₂O₄ mit einer Tropfgeschwindigkeit von 1 ml/Minute zugetropft und für weitere 2 Stunden bei 50 °C gerührt, wobei nach etwa 20 Minuten das gebildete Polyphenylensulfoxid in Lösung ging. Überschüssiges N₂O₄ gaste zum Teil während des Rührens aus. Restliches N₂O₄ in der Lösung wurde mit Hilfe einer Kapillare mit Stickstoffgas für 1 Stunde bei 50 °C ausgetrieben. Zur Ausfällung des Produktes wurde die Lösung mit 4 Liter entsalztem Wasser unter starkem Rühren vermischt und das Produkt abfiltriert und getrocknet. Die ESCA-Analyse des Produktes ergab, daß ca. 98 % der Schwefelgruppen des eingesetzten Polyphenylensulfids zu Sulfoxidgruppen umgewandelt worden sind (Polyphenylensulfoxid mit Sulfoxid-Anteil um 98 %). Die Dichte des Polyphenylensulfoxid betrug 1,40 g/cm³.

Das in den Beispielen 2 bis 8 verwendete Polyphenylensulfoxid aus Beispiel 1 und das eingesetzte Hochleistungspolymer wurden jeweils fein gemahlen.

2 - 7. In eine Aluminiumschale (4,0 cm x 4,0 cm) wurde eine Pulvermischung aus dem kommerziell erhältlichen hochtemperaturbeständigen Polymer A) und Polyphenylensulfoxid B) gefüllt und in einem geschlossenen Ofen bei den angegebenen Zeiten und Temperaturen behandelt. Dabei bildete sich jeweils ein Schaum mit einer dichten, geschlossenen Außenhaut (Integralschaum). Die Dichte des gebildeten Schaumes und des eingesetzten Polymers sind in der Tabelle angegeben. Die Schäume zeigten jeweils die erwartete Temperaturbeständigkeit der eingesetzten Polymere.

| Beispiel | 2 | 3 | 4 | 5 | 6 | 7 |
|---|---|---|---|---|---|---|
| Komp. A) Menge [g] | Ultrason E2010 10,3 | Ultrason S2010 13 | Ultem 1010 12 | Makrolon 2600PC 13 | Apec HT KU 1-9351 13 | PEEK 450 G 13 |
| Komp. B) Menge [g] | 1,8 | 2,3 | 1,8 | 2,5 | 3,0 | 3,5 |
| Schäumtemperatur [°C] Zeit [min] | 325 13 | 325 11 | 325 20 | 325 10 | 325 10 | 450 13 |
| Dichte Schaum [g/cm³] | 0,59 | 0,23 | 0,58 | 0,27 | 0,25 | 0,55 |
| Dichte A) [g/cm³] | 1,37 | 1,24 | 1,27 | 1,2 | 1,15 | 1,30 |
| ®Ultrason = Polyethersulfon der Firma BASF AG, Ludwigshafen, Deutschland | | | | | | |
| ®Ultem = Polyetherimid der Firma General Electric, Rüsselsheim, Deutschland | | | | | | |
| ®Makroton = Polycarbonat der Firma Bayer AG, Leverkusen, Deutschland | | | | | | |
| ®Apec = Polyacrylat der Firma Bayer AG, Leverkusen, Deutschland | | | | | | |
| ®PEEK = Polyetheretherketon der Firma Victrex Deutschland GmbH, Hofheim. | | | | | | |

8. 90 Gewichtsteile ®Vectra A 950 (Flüssigkristalliner Polyester der Fa. Ticona GmbH, Frankfurt, Deutschland) und 10 Gewichtsteile Polyphenylensulfoxid wurden in einem Zweiwellenkneter (Typ: LSM 30.34 der Fa. Leistritz GmbH, Nürnberg, Deutschland) bei 280 °C Massetemperatur ohne Schaumbildung miteinander vermischt, wobei das Vectra aufgeschmolzen wurde, während das Polyphenylensulfoxid nicht aufschmolz. Anschließend wurde die Formmasse granuliert und getrocknet. Dieses Granulat wurde anschließend auf einer Presse des Typs Polystat 200 S der Fa. Schwabenthau, Berlin zu einem Schaum verarbeitet. Hierzu wurden ca. 61 g der granulierten Mischung in eine zylindrische Form (Durchmesser: 120 mm) gegeben, deren Höhe variabel einstellbar war (Deckel in Höhe verschiebbar durch Spielpassung). Die gefüllte Form wurde unter die Presse gestellt und auf ca. 300 °C geheizt. Diese Temperatur wurde 25 Minuten lang gehalten bei einem Druck von 8 bar. Anschließend wurde die Form abgekühlt und der geschäumte Formkörper entnommen. Das Produkt hatte eine geschlossene Oberfläche und eine Dichte von 0,55 g/cm³ (zum Vergleich: Dichte von Vectra A950 ist 1,40 g/cm³).

## Patentansprüche

1. Verfahren zur Herstellung von Polymer-Schaum, **dadurch gekennzeichnet, dass** eine Formmasse aus
A) mindestens einem hochtemperaturbeständigen Polymer mit der Ausnahme von Polyamiden,
B) 1 bis 99 Gew.-% (bezogen auf den Gesamtpolymeranteil der Formmasse) mindestens eines Polyarylensulfoxids mit einem Sulfoxid-Anteil (bezogen auf alle Schwefel enthaltenden Brücken im Polymer) von mindestens 95 %, und
C) gegebenenfalls üblichen Additiven
bei einer Temperatur von 250 bis 470 °C erhitzt wird.

2. Verfahren nach Anspruch 1, **dadurch gekennzeichnet, daß** die Komponente B) in einer Menge von 1 bis 50 Gew.-%, insbesondere 3 bis 20 Gew.-% eingesetzt wird.

3. Verfahren nach Anspruch 1 oder 2, **dadurch gekennzeichnet, daß** das hochtemperaturbeständige Polymer ein Thermoplast ist.

4. Verfahren nach einem oder mehreren der Ansprüche 1 bis 3, **dadurch gekennzeichnet, dass** die Komponente B) Polyphenylensulfoxid ist.

5. Verfahren nach einem oder mehreren der Ansprüche 1 bis 4, **dadurch gekennzeichnet, daß** als hochtemperaturbeständiges Polymer A) ein Polyethersulfon, ein Polyarylat, ein Polyarylensulfid, ein Polyetherimid, ein Cycloolefincopolymer, ein Polycarbonat oder ein Poly(aryletherketon) eingesetzt wird.

6. Verfahren nach einem oder mehreren der Ansprüche 1 bis 5, **dadurch gekennzeichnet, daß** die mittlere Korngröße der Komponente A) bzw. B) im Bereich von 0,3 bis 500 µm, vorzugsweise 5 bis 300 µm und insbesondere 5 bis 100 µm liegt.

7. Verfahren nach einem oder mehreren der Ansprüche 1 bis 6, **dadurch gekennzeichnet, daß** das mittlere Molekulargewicht M_{w} der Komponente B) im Bereich von 4000 bis 200 000 g/mol, vorzugsweise 10 000 bis 150 000 g/mol und insbesondere 25 000 bis 100 000 g/mol liegt.

8. Verfahren nach einem oder mehreren der Ansprüche 1 bis 7, **dadurch gekennzeichnet, daß** als übliche Additive thermische Stabilisatoren, UV-Stabilisatoren, Antistatika, Flammschutzmittel, Farbstoffe, Pigmente, anorganische und/oder organische Füllstoffe oder Gleitmittelzusätze eingesetzt werden.

9. Verfahren nach einem oder mehreren der Ansprüche 1 bis 8, **dadurch gekennzeichnet, daß** die Temperatur im Bereich von 300°C bis 350°C liegt.

10. Verfahren nach Anspruch 4, **dadurch gekennzeichnet, daß** man zunächst bei Temperaturen unterhalb 300 °C eine ungeschäumte Formmasse herstellt, die dann durch Erhitzen oberhalb 300 °C in einen Schaum überführt wird.

11. Verfahren nach einem oder mehreren der Ansprüche 1 bis 10, **dadurch gekennzeichnet, daß** das Erhitzen in einer Zeit von 5 bis 60 Minuten, vorzugsweise 5 bis 30 Minuten durchgeführt wird.

12. Verfahren nach einem oder mehreren der Ansprüche 1 bis 11, **dadurch gekennzeichnet, daß** der gebildete Schaumstoff eine um mindestens 50 Prozent gegenüber dem unverschäumten Material verringerte Dichte aufweist.

13. Geschäumte hochtemperaturbeständige Polymere, erhältlich durch Erhitzen einer Formmasse aus
A) mindestens einem hochtemperaturbeständigen Polymeren mit der Ausnahme von Polyamiden,
B) 1 bis 99 Gew.-% (bezogen auf den Gesamtpolymeranteil der Formmasse) mindestens eines Polyarylensulfoxids mit einem Sulfoxid-Anteil (bezogen auf alle Schwefel enthaltenden Brücken im Polymer) von mindestens 95 %, und
C) gegebenenfalls üblichen Additiven
auf eine Temperatur von 250 bis 470 °C.

14. Verwendung von geschäumten hochtemperaturbeständigen Polymeren nach Anspruch 13zur Herstellung von Formteilen.

15. Verwendung nach Anspruch 14 zur Herstellung von temperaturbeständigen Isolationsmaterialien.

## Claims

1. A process for the production of a polymer foam, which comprises heating a molding composition comprising
A) at least one high-temperature-resistant polymer with the exception of polyamides,
B) from 1 to 99 % by weight (based on the total polymer content of the molding composition) of at least one polyarylene sulfoxide with a sulfoxide content (based on all the sulfur-containing bridges in the polymer) of at least 95%, and
C) if desired conventional additives,
at a temperature of from 250 to 470°C.

2. The process as claimed in claim 1, wherein component B) is employed in an amount of from 1 to 50 % by weight, in particular from 3 to 20 % by weight.

3. The process as claimed in claim 1 or 2, wherein the high-temperature-resistant polymer is a thermoplastic.

4. The process as claimed in one or more of claims 1 to 3, wherein component B) is polyphenylene sulfoxide.

5. The process as claimed in one or more of claims 1 to 4, wherein the high-temperature-resistant polymer A) is a polyether sulfone, a polyarylate, a polyarylene sulfide, a polyetherimide, a cycloolefin copolymer, a polycarbonate or a poly(aryl ether ketone).

6. The process as claimed in one or more of claims 1 to 5, wherein the mean particle size of component A) or B) is in the range from 0.3 to 500 µm, preferably from 5 to 300 µm and in particular from 5 to 100 µm.

7. The process as claimed in one or more of claims 1 to 6, wherein the mean molecular weight M_{w} of component B) is in the range from 4,000 to 200,000 g/mol, preferably from 10,000 to 150,000 g/mol, in particular from 25,000 to 100,000 g/mol.

8. The process as claimed in one or more of claims 1 to 7, wherein the conventional additives employed are thermal stabilizers, UV stabilizers, antistatics, flame retardants, dyes, pigments, inorganic and/or organic fillers or lubricant additives.

9. The process as claimed in one or more of claims 1 to 8, wherein the temperature is in the range from 300°C to 350°C.

10. The process as claimed in claim 4, which comprises first preparing an unfoamed molding composition at temperatures below 300°C and then converting said molding composition into a foam by heating at above 300°C

11. The process as claimed in one or more of claims 1 to 10, wherein the heating is carried out for a period of from 5 to 60 minutes, preferably from 5 to 30 minutes.

12. The process as claimed in one or more of claims 1 to 11, wherein the foam formed has a density at least 50 percent lower than that of the unfoamed material.

13. A foamed high-temperature resistant polymer obtainable by heating a molding composition comprising
A) at least one high-temperature-resistant polymer with the exception of polyamides,
B) from 1 to 99 % by weight (based on the total polymer content of the molding composition) of at least one polyarylene sulfoxide with a sulfoxide content (based on all the sulfur-containing bridges in the polymer) of at least 95%, and
C) if desired conventional additives,
to a temperature of from 250 to 470°C.

14. The use of a foamed high-temperature-resistant polymer as claimed in claim 13 for the production of moldings.

15. The use as claimed in claim 14 for the production of heat-resistant insulating materials.

## Revendications

1. Procédé pour la fabrication d'une mousse de polymère, **caractérisé en ce qu'**on chauffe à une température de 250 à 470°C une matière à mouler à base de
A) au moins un polymère résistant à haute température, à l'exception de polyamides,
B) 1 à 99 % en poids (par rapport à la quantité totale de polymères de la matière à mouler) d'au moins un poly(arylène-sulfoxyde) ayant une teneur en sulfoxyde (par rapport à tous les ponts contenant du soufre dans le polymère) d'au moins 95 %, et
C) éventuellement des additifs usuels.

2. Procédé selon la revendication 1, **caractérisé en ce que** le composant B) est utilisé en une quantité de 1 à 50 % en poids, en particulier de 3 à 20 % en poids.

3. Procédé selon la revendication 1 ou 2, **caractérisé en ce que** le polymère résistant à haute température est une matière thermoplastique.

4. Procédé selon une ou plusieurs des revendications 1 à 3, **caractérisé en ce que** le composant B) est le poly(phénylène-sulfoxyde).

5. Procédé selon une ou plusieurs des revendications 1 à 4, **caractérisé en ce qu'**en tant que polymère A) résistant à haute température on utilise une polyéthersulfone, un polyacrylate, un poly(sulfure d'arylène), un polyétherimide, un copolymère de cyclo-oléfine, un polycarbonate ou une poly(aryléthercétone).

6. Procédé selon une ou plusieurs des revendications 1 à 5, **caractérisé en ce que** la taille moyenne de particules du composant A) ou, respectivement, B) se situe dans la plage allant de 0,3 à 500 µm, de préférence de 5 à 300 µm et en particulier de 5 à 100 µm.

7. Procédé selon une ou plusieurs des revendications 1 à 6, **caractérisé en ce que** la masse moléculaire moyenne M_{w} du composant B) se situe dans la plage allant de 4 000 à 200 000 g/mole, de préférence de 10 000 à 150 000 g/mole et en particulier de 25 000 à 100 000 g/mole.

8. Procédé selon une ou plusieurs des revendications 1 à 7, **caractérisé en ce qu'**on utilise comme additifs usuels des stabilisants thermiques, des stabilisants UV, des agents antistatiques, des agents ignifuges, des colorants, des pigments, des charges organiques et/ou minérales ou des additifs lubrifiants.

9. Procédé selon une ou plusieurs des revendications 1 à 8, **caractérisé en ce que** la température est dans la plage de 300°C à 350°C.

10. Procédé selon la revendication 4, **caractérisé en ce qu'**on prépare d'abord à des températures inférieures à 300°C une masse à mouler non expansée, qui est ensuite transformée en une mousse par chauffage au-dessus de 300°C.

11. Procédé selon une ou plusieurs des revendications 1 à 10, **caractérisé en ce que** le chauffage est effectué en une durée de 5 à 60 minutes, de préférence de 5 à 30 minutes.

12. Procédé selon une ou plusieurs des revendications 1 à 11, **caractérisé en ce que** la mousse formée présente une densité réduite d'au moins 50 % par rapport à celle du matériau non expansé.

13. Polymères expansés résistants à haute température, pouvant être obtenus par chauffage à une température de 250 à 470°C d'une matière à mouler à base de
A) au moins un polymère résistant à haute température, à l'exception de polyamides,
B) 1 à 99 % en poids (par rapport à la quantité totale de polymères de la matière à mouler) d'au moins un poly(arylène-sulfoxyde) ayant une teneur en sulfoxyde (par rapport à tous les ponts contenant du soufre dans le polymère) d'au moins 95 %, et
C) éventuellement des additifs usuels.

14. Utilisation de polymères expansés résistants à haute température selon la revendication 13, pour la fabrication de pièces moulées.

15. Utilisation selon la revendication 14, pour la fabrication de matériaux isolants résistants à haute température.
